# EUROPÄISCHE PATENTSCHRIFT

(11) **EP 2 081 746 B1**
(45) Veröffentlichungstag und Bekanntmachung des Hinweises auf die Patenterteilung: **09.02.2011**
(21) Anmeldenummer: 07818375.3
(22) Anmeldetag: 25.09.2007
(51) Int. Cl.: B29C 45/14, B21D 26/02

(54) **VERFAHREN UND VORRICHTUNG ZUR HERSTELLUNG EINES VERBUNDBAUTEILS**
METHOD AND DEVICE FOR PRODUCING A COMPOSITE COMPONENT
PROCÉDÉ ET DISPOSITIF DE PRODUCTION D'UN ÉLÉMENT COMPOSITE

(30) Priorität: 12.10.2006 DE 102006048290
(43) Veröffentlichungstag der Anmeldung: 29.07.2009
(73) Patentinhaber: Daimler AG, 70327 Stuttgart (DE)
(72) Erfinder: AUGUSTIN, Helmut, 21149 Hamburg (DE); DUDZIAK, Kai-Uwe, 21435 Stelle (DE); FALKE, Jürgen, 25462 Rellingen (DE); NOTTBUSCH, Hans, 22143 Hamburg (DE); SCHROEDER, Matthias, 35428 Langgöns/Espa (DE); SCHULT, Jens, 21435 Stelle (DE)
(74) Vertreter: JENSEN & SON
(86) Internationale Anmeldenummer: PCT/EP2007/008290
(87) Internationale Veröffentlichungsnummer: WO 2008/043432

(56) Entgegenhaltungen:
- WO-A-01/87568
- WO-A-98/46382
- WO-A-2005/039799
- WO-A-2005/061145
- DE-A1- 2 645 855
- DE-A1- 10 014 332
- DE-A1- 10 326 768

## Beschreibung

Die Erfindung betrifft ein Verfahren zur Herstellung eines Verbundbauteils gemäß dem Oberbegriff des Patentanspruches 1 sowie eine Vorrichtung zur Durchführung desselben gemäß dem Oberbegriff des Patentanspruches 6.

Ein gattungsgemäßes Verfahren beziehungsweise eine gattungsgemäße Vorrichtung ist aus der DE 100 14 332 C2 bekannt. Dort ist ein Verfahren beschrieben, das sich eines Kombinationswerkzeugs aus einem Innenhochdruckumformwerkzeug und einem Spritzgießwerkzeug bedient. Zur Herstellung des Verbundbauteils wird ein Hohlprofilrohling in die Gravur des Kombinationswerkzeugs eingelegt, mit einem Druckfluid befüllt, unter Druck gesetzt und abgedichtet. Anschließend wird das Kombinationswerkzeug geschlossen, wodurch sich der Hohlprofilrohling an die Gravur des Kombinationswerkzeugs formgetreu gemäß dem Innenhochdruckumformverfahren anlegen soll. Anschließend wird das fertig geformte Hohlprofil im selben Werkzeug durch Aktivieren des Spritzgießwerkzeugs über einen Einspritzkanal, der in eine in die Gravur eingebundene Kavität einmündet, mit Kunststoff umspritzt. Nach Abkühlen und Erstarren des Kunststoffs findet der Druckabbau im fertig gestellten Verbundbauteil statt. Danach erfolgt die Entleerung des Verbundbauteils von dem Druckfluid, wonach das Kombinationswerkzeug geöffnet wird und das Verbundbauteil diesem entnommen wird. Bei der Befüllung des Hohlprofilrohlings und der Entleerung des Verbundbauteils vom Druckfluid wird jeweils dieses nicht nur innenseitig benetzt, sondern es gelangt auch ein Teil des Druckfluids in die Gravur des Kombinationswerkzeugs hinein. Bei den gebräuchlichen Innenhochdruckumformverfahren und Innenhochdruckumformwerkzeugen ist diese Verschleppung des Druckfluids in die Gravur unkritisch, da sich das Druckfluid im weiteren Prozess selbstständig auf Grund des wirkenden Flächendruckes verdrängen lässt. Beim Umspritzen des Bauteils dann mit Kunststoff in dem anschließenden Spritzgießprozess, der im gleichen Werkzeug abläuft, ist jedoch eine saubere, unbenetzte Oberfläche sowohl am Bauteil als auch in der Werkzeuggravur erforderlich. Anderenfalls werden der Prozess und die zu erzielende Qualität des Verbundbauteils negativ beeinträchtigt, da der Kunststoff zumeist mit dem Druckfluid reagiert. Da dieses bei der auftreffenden Kunststoffschmelze in die Dampfphase übergeht, können Gasblasen im Kunststoff entstehen, so dass die gewünschte Steifigkeit nach Aushärtung des Kunststoffes nicht erzielt wird. Zumindest wird es zu Beeinträchtigungen in der Kunststoffoberfläche durch Schlierenbildung kommen. Gegebenenfalls ist der Halt des ausgehärteten Kunststoffelements am Hohlprofil nicht in ausreichendem Maße vorhanden, da sich das Druckfluid, das in die Gravur gelangt ist, zwischen die Kunststoffmasse und der Oberfläche des Hohlprofils pressen lässt.

Der Erfindung liegt die Aufgabe zu Grunde, ein gattungsgemäßes Verfahren dahingehend weiterzubilden, dass in relativ einfacher Weise das Verbundbauteil prozesssicher hergestellt werden kann. Des Weiteren soll eine Vorrichtung zu dessen Ausführung angegeben werden.

Die Aufgabe ist erfindungsgemäß durch die Merkmale des Patentanspruches 1 hinsichtlich des Verfahrens und durch die Merkmale des Patentanspruches 6 hinsichtlich der Vorrichtung gelöst.

Auf Grund dessen, dass die erfindungsgemäße Vorrichtung eine Entleerungseinrichtung aufweist, mit der das umgeformte Hohlprofil im abgedichteten Zustand zumindest bis zur Tropffreiheit geleert wird, wobei das Druckfluid unter Einwirkung eines Druckes aus dem Hohlprofil über zumindest einen im Axialstempel ausgebildeten Entsorgungskanal ausgetrieben wird, wird erreicht, dass bei der späteren Entnahme des fertig gestellten Verbundbauteils kein Druckfluid in das Kombinationswerkzeug gelangen kann, so dass der sonst im Werkzeug verbleibende Druckfluidanteil nicht mit der Kunststoffmasse in Berührung kommen kann. Hierdurch wird die Prozesssicherheit des Herstellungsverfahrens erheblich verbessert, was zu einem verbesserten Halt des Kunststoffs am Hohlprofil und zur Verhinderung eines sonst anfallenden Steifigkeitsverlustes führt. Vorzugsweise erfolgt die Abführung des Druckfluids bzw. die Entleerung des Bauteils bis zur Tropffreiheit am fertig gestellten Verbundbauteil, da das Druckfluid während des Spritzgießens im umgeformten Hohlprofil verbleiben soll, um dem Spritzgussdruck entgegenzuwirken und damit verbundene Kollapse des Hohlprofils zu verhindern.

Die Axialstempel weisen jeweils einen Durchgangskanal auf, der einerseits in den Rohling mündet und der andererseits an eine Fluidhochdruckerzeugungsanlage angeschlossen ist. Hierdurch kann das im Rohling eingeschlossene Fluid sehr feinfühlig an den jeweiligen Aufweitungsfortschritt angepasst und mit verschiedenen Druckniveaus beaufschlagt werden, so dass auch komplexer auszuformende Rohlinge prozesssicher in ihre Endform gebracht werden können, bevor sie dann als fertig umgeformtes Hohlprofil mit Kunststoff umspritzt werden. Durch die damit erworbene Möglichkeit, den Fluiddruck variabel zu steuern, können während des Spritzgießens im Hohlprofil Stützdrücke aufgebracht werden, die erheblich geringer sind als die vorher benötigten Umformdrücke, so dass verhindert wird, dass das ausbildende Verbundbauteil nicht in unerwünschter Weise expandiert und verformt wird.

Durch die Erfindung spielt die räumliche Anordnung der Vorrichtung zur Herstellung des Verbundbauteils keine Rolle. Hierdurch wird die Aufstellung der Vorrichtung in einer Werkshalle wesentlich flexibler. Die Höhe des zum Austreiben des Druckfluids aufzubringenden Druckes soll im Übrigen derart bemessen sein, dass sich am fertig gestellten Verbundbauteil keinerlei zusätzliche mechanische Verformungen im Bereich der Umspritzung ergeben. Zur Entleerung, die im Idealfall auch bis zur völligen Austrocknung des Hohlprofils des Verbundbauteils führen kann, ist es denkbar, das Druckfluid einer erhöhten Temperatur auszusetzen, so dass dieses als unter Überdruck stehender Dampf aus dem Verbundbauteil herausgeleitet werden kann. Die Durchgangsbohrung wie auch der Entsorgungskanal sind im Axialstempel einfach auszubilden, ohne dessen Festigkeit entscheidend herabzusetzen. Auf Grund der Verwendung eines Kombinationswerkzeugs zur Herstellung des Verbundbauteils, mit dem das Innenhochdruckumformen und das Spritzgießen mit ein und derselben Gravur erfolgt, ist ein Umsetzen des Hohlprofils für das Umspritzen in eine andere Kavität beziehungsweise in ein anderes Werkzeug nicht erforderlich, wodurch zum einen lagebedingte Umsetzfehler vermieden werden und was zum anderen das Kombinationswerkzeug kompakter werden lässt. Umsetzfehler können ansonsten zu erhöhtem Ausschuss führen, was kostenträchtig ist und die Ressourcen unnötig belastet. Des Weiteren sind qualitätserhaltende Maßnahmen, die Fehlteile erkennen und gegebenenfalls diese in Gutteile umwandeln, nicht notwendig. Weiterhin wird die Herstellungszeit erheblich verkürzt, da durch die Erfindung kein zeitintensives Umsetzen erforderlich ist. Durch die erfindungsgemäß Druckfluidabführung wird bei der Verwendung eines einfachen Stahlwerkstoffes geringerer Qualität für das Hohlprofil im Übrigen auch eine bei diesem und damit des Verbundbauteils sonst bereits einsetzende Korrosion zumindest weitgehend unterbunden.

In einer besonders bevorzugten Weiterbildung der Erfindung nach Anspruch 5 wird der Rohling im geschlossenen Kombinationswerkzeug durch Hochdruckbeaufschlagung des Druckfluids aufweitend umgeformt. Hierdurch wird erreicht, dass der Rohling ohne auszuknicken oder Falten zu werfen, wie es in dem genannten Stand der Technik möglich ist, prozesssicher zum Hohlprofil umgeformt wird. Das Rohlingsmaterial befindet sich innerhalb der Gravur, aus der es im geschlossenen Zustand des Kombinationswerkzeugs nicht entweichen kann und sich somit wunschgemäß auf Grund des hochgespannten Druckfluids aufweiten und sich konturgetreu an die Gravur des Kombinationswerkzeugs anlegen kann.

In einer besonders bevorzugten Ausgestaltung der erfindungsgemäßen Vorrichtung nach Anspruch 7 weist die erfindungsgemäße Einrichtung zur leckage- und tropffreien Entleerung eine Druckversorgungseinheit auf, mittels derer das Druckfluid zum Austreiben druckbeaufschlagbar ist. Durch die Anordnung der Druckversorgungseinheit wird die leckage- und tropffreie Entleerung des fertig hergestellten Verbundbauteils ganz wesentlich beschleunigt, so dass die Gesamtherstellungszeit nur unerheblich verlängert wird. Die Druckversorgungseinheit ist über die Durchgangsbohrung mit dem Inneren des Hohlprofils verbunden, so dass keine separate Leitung dafür vorgesehen sein muss, welche die Festigkeit des Axialstempels eventuell beeinträchtigen würde.

In einer weiteren bevorzugten Weiterbildung der erfindungsgemäßen Vorrichtung nach Anspruch 8 arbeitet die Druckversorgungseinheit mit Unterdruck. Hierdurch wird entsprechend dem erfindungsgemäßen Verfahren nach Anspruch 2 das Druckfluid aus dem Hohlprofil abgesaugt. Hierbei ist es günstig, dass lediglich nur die Durchgangsbohrung zum Absaugen des Druckfluids verwendet wird, so dass ein zusätzlicher Kanal im Axialstempel nicht ausgebildet werden muss. Dies verringert den apparativen Aufwand bei der Ausbildung des Axialstempels bedeutsam. Weiterhin ist es denkbar, über die Durchgangsbohrung eine Leitung in Form eines Schlauches oder eines Hohlzylinders in das Hohlprofil einzuführen, welcher sehr genau an die Innenwandung des Hohlprofils beziehungsweise des Verbundbauteils herangeführt werden kann. Dadurch wird auch der bei der Entleerung noch meist anhaftende Feuchtigkeitsfilm erfasst, was die Effizienz der Trocknung erheblich steigert.

In einer besonders bevorzugten Ausgestaltung der erfindungsgemäßen Vorrichtung nach Anspruch 9 bildet die Druckversorgungseinheit die Fluidhochdruckerzeugungsanlage oder zumindest einen Teil von dieser, welche zum Austreiben des Druckfluids bezüglich der Druckrichtung während der Aufweitphase des Hohlprofilrohlings invertiert arbeitet. Dies stellt eine erhebliche Vereinfachung der gesamten erfindungsgemäßen Vorrichtung dar, da eine separate Unterdruckversorgung entfallen kann. Die Invertierung der Fluidhochdruckerzeugungsanlage ist steuerungstechnisch sehr einfach und bedeutet nur geringen Aufwand. Da die Fluidhochdruckerzeugungsanlage dafür ausgelegt ist, für die Aufweitphase des Hohlprofilrohlings extrem hohe Überdrücke bereitzustellen, gilt dies in der invertierten Arbeitsphase entsprechend auch für die Erzeugung von Unterdruck. Dies führt dazu, dass das Druckfluid besonders schnell aus dem Hohlprofil beziehungsweise dem Verbundbauteil entfernt und dadurch der der tropffreie Zustand sehr schnell vollständig erreicht wird. Die Wirkrichtungsänderung der Anlage erfolgt natürlich erst nach dem Umspritzen des fertig ausgeformten Hohlprofils oder im zeitlichen Überlapp noch teilweise während des Umspritzvorgangs, wenn nur noch niedrige oder keine Stützdrücke aufgeboten werden müssen. Die Durchgangsbohrung bildet dabei den Durchgangskanal und/oder den Entsorgungskanal. Auch hier wird in vorrichtungsvereinfachender Form darauf geachtet, dass nur die zwingend benötigten Kanäle für das Austreiben des Druckfluids verwendet werden. Hierdurch erhalten die Kanäle in verfahrensökonomisch günstiger Weise Doppel- oder Mehrfachfunktionen über die Dauer des gesamten Herstellungsvorgangs des Verbundbauteils hinweg, wobei beispielsweise der Durchgangskanal während der Aufweitphase des Hohlprofilrohlings für die Hochdruckerzeugung und in der Entleerungsphase für das Entfernen des Druckfluids verwandt wird.

In einer besonders bevorzugten Weiterbildung der Erfindung nach Anspruch 3 erfolgt das Austreiben des Druckfluids durch Beaufschlagung des Hohlprofilinneren mittels Pressluft, die über einen im Axialstempel ausgebildeten separat zum Entsorgungskanal angeordneten Druckzufuhrkanal in das Hohlprofilinnere eingeleitet wird. Hierzu wird gemäß der bevorzugten Weiterbildung der erfindungsgemäßen Vorrichtung nach Anspruch 10 die Druckerzeugungseinheit verwandt. Zwar ist hier ein zusätzlicher Kanal im Axialstempel von Nöten, jedoch wird das Druckfluid besonders schnell aus dem Hohlprofil beziehungsweise dem Verbundbauteil entfernt, wobei das Druckfluid über den Entsorgungskanal nach außen verdrängt wird. Die Druckluft nimmt des Weiteren im Hohlprofil verbliebene Druckfluidfeuchtigkeit in sich auf und führt diese ebenfalls über den Entsorgungskanal ab, so dass eine schnelle Entleerung des Hohlprofilinneren gewährleistet ist. Hierbei braucht auch nicht die Pressluft direkt auf die feuchten Stellen im Hohlprofilinneren gerichtet werden, da die Pressluft im Hohlprofil verwirbelt, dort die Feuchtigkeit aufnimmt, so dass diese Feuchtigkeit vom Pressluftstrom nach außen abgeführt wird.

In einer weiteren besonders bevorzugten Weiterbildung der Erfindung nach Anspruch 11 ist der Entsorgungskanal an der geodätisch tiefsten Stelle des Axialstempels angeordnet. Da sich das Druckfluid beziehungsweise die von diesem verbliebene Feuchtigkeit im Wesentlichen an der geodätisch tiefsten Stelle auf Grund der Schwerkraft absetzt, kann das Druckfluid und die Feuchtigkeit besonders effektiv über den Entsorgungskanal aus dem Hohlprofilinneren herausgetrieben werden. Konstruktive Hindernisse bei in der Innenhochdruckumformtechnik gebräuchlichen Axialstempeln, deren zentrale Durchgangskanäle eine relativ hohe Ausmündung besitzen und damit das vollständige Abführen des Druckfluids beziehungsweise der Feuchtigkeit erschweren oder gar verhindern, sind durch diese vorteilhafte Anordnung des Entsorgungskanals ausgeräumt.

In einer weiteren bevorzugten Weiterbildung der erfindungsgemäßen Vorrichtung nach Anspruch 12 ist der Entsorgungskanal durch den Durchgangskanal gebildet. Hierdurch wird die Ausbildung des Axialstempels vereinfacht, wobei wiederum vorteilhafter Weise der Durchgangskanal eine Doppelfunktion erhält. Alternativ kann der Durchgangskanal auch zentral im Axialstempel verlaufen, wobei dann der Entsorgungskanal in diesen einmündet, so dass der Durchgangskanal bei geschickter Auslegung des Verlaufs des Entsorgungskanals bereits kurz vor dem Austritt in das Hohlprofilinnere die Aufgabe des Entsorgungskanals übernimmt. Im Gegenzug kann der Entsorgungskanal zum Druckaufbau während der Aufweitphase des Hohlprofilrohlings mittels fluidischen Innenhochdrucks behilflich sein, indem über den Entsorgungskanal auch ein Teilstrom des Druckfluids in das Hohlprofilinnere geleitet wird, wonach über die Fluidhochdruckerzeugungsanlage durch die gemeinsame fluidische Verbindung zwischen dem Durchgangs- und Entsorgungskanal auf beiden Wegen mit gleichem Druck das Druckfluid druckbeaufschlagt werden kann.

Gemäß der bevorzugten Ausgestaltung des erfindungsgemäßen Verfahrens nach Anspruch 4 und der erfindungsgemäßen Vorrichtung nach Anspruch 13 wird der Hohlprofilrohling vor dem Befüllen mittels der Axialstempel abgedichtet, wonach das Hohlprofil befüllt wird, in dem das Druckfluid über zumindest eine im Axialstempel ausgebildete Zulaufbohrung in das Hohlprofil eingeleitet wird. Gleichzeitig wird die im Hohlprofilrohling eingeschlossene Luft aus diesem über einen zur Zulaufbohrung separaten Entlüftungskanal zumindest einer der Axialstempel herausgeleitet. Hierdurch wird erreicht, dass auch beim Befüllen des Hohlprofilrohlings keinerlei Druckfluid am Hohlprofilrohling vorbei in die Gravur des Kombinationswerkzeugs dringen kann und dort die eingangs erwähnten Probleme auslöst. Durch die Verhinderung dieses eventuellen Eindringens des Druckfluids in die Gravur des Kombinationswerkzeugs wird die Prozesssicherheit über den gesamten Herstellungsablauf hinweg gewährleistet. Bei der Befüllung wird das Hohlprofilinnere durch das Druckfluid vollständig ausgefüllt und die Innenwandung des Hohlprofilrohlings durchgängig benetzt. Ober den Entlüftungskanal entweicht bei der Befüllung die eingeschlossene Luft, wobei idealerweise nach erfolgter Befüllung keinerlei Luft mehr im Hohlprofilrohling vorhanden ist. Die Befüllung kann vorteilhafterweise im geschlossenen Zustand des Kombinationswerkzeugs erfolgen, wodurch ummittelbar im Anschluss an die Befüllung die Umformung des Hohlprofilrohlings mittels fluidischen Innenhochdrucks folgen kann. Das Schließen des Kombinationswerkzeugs und das Befüllen des Hohlprofilrohlings können auch - um die Herstellungszeit weiter zu verkürzen - gleichzeitig abfolgen.

In einer besonders bevorzugten Weiterbildung der Erfindung nach Anspruch 14 sind der Entlüftungskanal mit dem Druckzufuhrkanal und die Zulaufbohrung mit dem Entsorgungskanal und/oder der im Axialstempel verlaufenden Durchgangsbohrung identisch. Auf Grund der Multifunktionsübernahme der einzelnen Kanäle sind in den Axialstempeln allenfalls drei Kanäle auszubilden, was einen geringen apparativen Aufwand bedeutet und die Festigkeit des Axialstempels nicht angreift.

Die Kanäle und Bohrungen in den Axialstempeln können mit Ventilen ausgerüstet sein, die entsprechend der jeweiligen Phase der Herstellung des Verbundbauteils auf- oder zugesteuert werden, so dass die jeweilige Funktion der Kanäle klar definiert ist und somit die Axialstempel den unterschiedlichen Anforderungen im gesamten Herstellungsprozess des Verbundbauteils unter Aufnahme der jeweiligen Funktion optimal genügen können.

Nachfolgend ist die Erfindung anhand eines in den Zeichnungen dargestellten Ausführungsbeispiels näher erläutert.

Dabei zeigen:
- Fig. 1: in einem seitlichen Längsschnitt eine erfindungsgemäße Vorrichtung beim Befüllen eines Hohlprofilrohlings in geschlossenem Zustand des erfindungsgemäßen Kombinationswerkzeugs,
- Fig. 2: in einem seitlichen Längsschnitt die erfindungsgemäße Vorrichtung aus Figur 1 beim Entleeren des fertig gestellten Verbundbauteils.

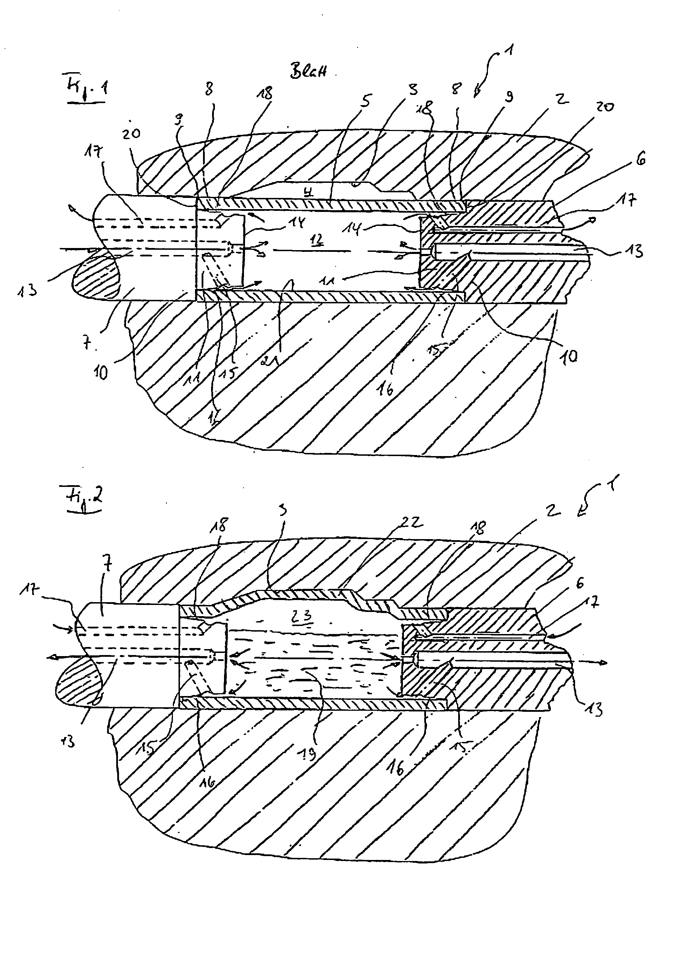

In Figur 1 ist eine Vorrichtung 1 zur Herstellung eines Verbundbauteils dargestellt, welche ein Kombinationswerkzeug, das sich aus einem Innenhochdruckumformwerkzeug 2 und einem hier nicht weiter gezeigten Spritzgießwerkzeug zusammensetzt, dargestellt. Das Innenhochdruckumformwerkzeug 2 weist eine Gravur 3 auf, die mit der des Kombinationswerkzeugs identisch ist und einen Formraum 4 begrenzt, in dem ein Hohlprofilrohling 5 aufgenommen ist. Das Spritzgießwerkzeug ist im Innenhochdruckumformwerkzeug 2 integriert und über einen Einspritzkanal an eine in die Gravur 3 eingebundene Kavität angeschlossen.

Nach Einlegen des Hohlprofilrohlings 5 in die Gravur 3 des Kombinationswerkzeugs wird dieses geschlossen. Den geschlossenen Zustand des Kombinationswerkzeugs geben die Figuren 1 und 2 wider. Während des Schließvorgangs oder im Anschluss daran werden zwei Axialstempel 6 und 7 in die Rohlingsenden 8 eingeschoben, wobei sich eine fluidhochdruckdichte Abdichtung einstellt. Hierzu weisen die Axialstempel 6 und 7 einen radial nach innen stehenden umlaufenden Absatz 9 auf, der am Ende des Axialstempels 6 und 7 ausgebildet ist und an der Abschlusskante 20 des rohrförmigen Hohlprofilrohlings 5 anschlägt. Das Ende 10 der Axialstempel 6 und 7 setzt sich in einem an den Absatz 9 anschließenden, zentral angeordneten, konisch verjüngten Kopf 11 fort, der in das Hohlprofilinnere 12 eintaucht.

Nach erfolgter Abdichtung des Hohlprofilrohlings 5 wird dieser nun mit einem Druckfluid 19 (Figur 2) befüllt. Hierzu weist die Vorrichtung 1 eine Befülleinrichtung auf, die einen Tank beinhaltet, aus dem das Druckfluid 19 in das Innere 12 des Hohlprofilrohlings 5 eingeleitet wird. Hierzu besitzen die Axialstempel 6 und 7 zentrale Zulaufbohrungen 13, die an der Stirnseite 14 des Kopfes 11 der Axialstempel 6 und 7 ausmünden und zur anderen Seite hin über eine Pumpe an den Tank angeschlossen sind. Zur beschleunigten Befüllung weist die zentrale Zulaufbohrung 13 eine Verzweigung 15 auf, die an einer unteren Flanke 16 des Kopfes 11 an der geodätisch tiefsten Stelle des Axialstempels 6 und 7 ausmündet. Der Hohlprofilrohling 5 wird vollständig befüllt, wobei seine Innenseite 21 vom Druckfluid 19 benetzt wird. Die im Hohlprofilrohling 5 eingeschlossene Luft entweicht über einen im Axialstempel 6 und 7 verlaufenden Entlüftungskanal 17, der an einer oberen Flanke 18 des Kopfes 11 des jeweiligen Axialstempels 6 und 7 in den Hohlprofilrohling 5 ausmündet. Durch die Verdrängung mittels des Druckfluids 19 wird jegliche Luft aus dem Inneren 12 des Hohlprofilsrohlings 5 nach außen abgeführt. Der Entlüftungskanal 17 verläuft separat zur zentralen Zulaufbohrung 13 und der Verzweigung 15 in den Axialstempeln 6 und 7.

Nach der Befüllung wird eine Fluidhochdruckerzeugungsanlage an einen Durchgangskanal der Axialstempel 6 und 7 angeschlossen, der in das Innere 12 des Hohlprofilrohlings 5 einmündet. Der Durchgangskanal ist hier identisch mit der zentralen Zulaufbohrung 13 und deren Verzweigung 15. Der Durchgangskanal kann jedoch auch separat zur Zulaufbohrung 13 im Axialstempel 6 und 7 angeordnet sein. Es ist im Übrigen denkbar, dass die Fluidhochdruckerzeugungsanlage in den Befüllkreislauf integriert ist und die Förderpumpe beinhaltet, die das Druckfluid 19 aus dem Tank in den Hohlprofilrohling 5 zuführt. Zur Erzeugung eines Fluidhochdrucks innerhalb des Hohlprofilrohlings 5 wird der Druckübersetzter der Fluidhochdruckerzeugungsanlage eingekoppelt, wodurch das Druckfluid 19 hochgespannt wird. Unter dem Einfluss dieses hochgespannten Druckfluids 19 weitet sich der Hohlprofilrohling 5 auf und legt sich konturgetreu an die Gravur 3 des Kombinationswerkzeugs an. In diesem Zustand ist der Hohlprofilrohling 5 zum gewünschten Hohlprofil 22 ausgeformt. Im Anschluss an die Umformung wird das Hohlprofil 22 durch das in das Innenhochdruckumformwerkzeug integrierte Spritzgießwerkzeug mit Kunststoff umspritzt, wobei das Spritzgießwerkzeug an ein in die Gravur 3 des Kombinationswerkzeugs eingebundene Kavität über einen Einspritzkanal angeschlossen ist. Die Umspritzung kann an der Stelle der vorangegangenen Ausformung des Hohlprofils 22 erfolgen, wodurch das Spritzgussmaterial mit der Ausformung des Hohlprofils 22 einen Formschluss eingeht, was den Halt des Kunststoffmaterials am Hohlprofil 22 weiter verbessert und damit die Haltbarkeit des Verbundbauteils steigert. Es ist jedoch auch möglich, das Hohlprofil 22 an anderer Stelle zu umspritzen, wenn dies die an das Verbundbauteil gerichteten Anforderungen vorschreiben.

Nach Aushärtung des spritzgegossenen Kunststoffs wird das Hohlprofil 22 beziehungsweise das Verbundbauteil entleert. Hierzu wird der Fluidhochdruck entspannt und das Hohlprofilinnere 23 mit einer Entleerungseinrichtung über eine im Axialstempel 6 und 7 ausgebildete Durchgangsbohrung verbunden. Die Entleerungseinrichtung weist dabei eine Druckversorgungseinheit auf, mittels derer das Druckfluid 19 zum Austreiben aus dem Hohlprofilinneren 23 druckbeaufschlagbar ist. Die Druckversorgungseinheit kann mit Unterdruck arbeiten und mit der Fluidhochdruckerzeugungsanlage identisch oder ein Teil von dieser sein, wobei zum Austreiben des Druckfluids 19 die Fluidhochdruckerzeugungsanlage in Bezug auf ihre Druckrichtung entgegen der Richtung während der Aufweitphase des Hohlprofilrohlings 5 invertiert arbeitet. Die Durchgangsbohrung bildet dabei den Durchgangskanal und damit die Zulaufbohrung 13. Des Weiteren erstreckt sich im Axialstempel 6 und 7 ein Entsorgungskanal, der mit der Verzweigung 15 identisch ist und der einen Teil der Durchgangsbohrung bildet. Das Druckfluid 19 wird dann mittels der Fluidhochdruckerzeugungsanlage über die Zulaufbohrung 13 und die Verzweigung 15 aus dem Hohlprofilinneren 23 abgesaugt. Gleichzeitig füllt sich das Hohlprofil 22 mit Luft, die über den Entlüftungskanal 17 in das Hohlprofilinnere 23 einströmt.

In dem gemäß Figur 2 vorliegenden Ausführungsbeispiel jedoch arbeitet die Druckerzeugungseinheit mit Pressluft. Diese wird über einen im Axialstempel 6 und 7 verlaufenden Druckzufuhrkanal, der hier durch die Entlüftungsleitung 17 gebildet wird, in das Hohlprofilinnere 23 eingeleitet. Pressluftbeaufschlagt wird nun das Druckfluid 19 aus dem Hohlprofilinneren 23 über den Entsorgungskanal und die Durchgangsbohrung nach außen in den Tank getrieben. Gleichzeitig trocknet der Pressluftstrom das Hohlprofilinnere 23. Die Mündung des Entsorgungskanals beziehungsweise der Verzweigung 15 ist an der geodätisch tiefsten Stelle des Axialstempels 6 und 7 angeordnet, so dass auch Druckfluid 19 nach außen geführt werden kann, wenn dessen Pegel unterhalb der Durchgangsbohrung steht. Damit ist es möglich, das gesamte Druckfluid 19 aus dem Hohlprofilinneren 23 nach außen zu führen. Obwohl im vorliegenden Ausführungsbeispiel der Entlüftungskanal 17 mit dem Druckzufuhrkanal, über den die Pressluft eingeleitet wird, identisch ist, können diese Kanäle auch separat voneinander in den Axialstempeln 6 und 7 verlaufen. Gleiches gilt für die Durchgangsbohrung, die hier mit dem Durchgangskanal, über den der Fluidhochdruck aufgebaut wird, und der Zulaufbohrung gleichgesetzt ist. Ebenso gilt dies für den Entsorgungskanal, der hier mit dem Durchgangskanal beziehungsweise einem Teil des Durchgangskanals und der Verzweigung 15 der Zulaufbohrung 13 entspricht.

Nach Entleerung des Hohlprofilinneren 23, das nun zumindest den Zustand der Tropffreiheit erreicht hat, werden die Axialstempel 6 und 7 aus dem Hohlprofilinneren 23 zurückgezogen, so dass das Hohlprofil 22 frei in der Gravur 3 des Kombinationswerkzeugs liegt. Anschließend wird dieses geöffnet und das fertig gestellte Verbundbauteil der Gravur 3 entnommen.

## Patentansprüche

1. Verfahren zur Herstellung eines Verbundbauteils, wobei ein rohrförmiger Hohlprofilrohling (5) in die Gravur (3) eines aus einem Innenhochdruckumformwerkzeug (2) und einem Spritzgießwerkzeug bestehenden Kombinationswerkzeugs eingebracht, mit einem Druckfluid (19) so befüllt, dass der Rohling (5) dabei von diesem innen benetzt wird, und mittels zweier Axialstempel (6,7) endseitig abgedichtet wird, wonach der befüllte und unter Druck gesetzte Rohling (5) aufweitend umgeformt wird, wobei anschließend das fertiggeformte Hohlprofil (22) im selben Werkzeug mit Kunststoff umspritzt wird,
**dadurch gekennzeichnet, dass** das Hohlprofil (22) nach der Umformung im abgedichteten Zustand zumindest bis zur Tropffreiheit entleert wird, wobei das Druckfluid (19) unter Einwirkung eines Druckes aus dem Hohlprofil (22) über zumindest einen im Axialstempel (6,7) ausgebildeten Entsorgungskanal ausgetrieben wird, wobei die Axialstempel (6,7) jeweils einen Durchgangskanal aufweisen, der einerseits in den Rohling (5) mündet und der andererseits an eine Fluidhochdruckerzeugungsanlage angeschlossen ist.

2. Verfahren nach Anspruch 1,
**dadurch gekennzeichnet, dass** das Druckfluid (19) aus dem Hohlprofil (22) abgesaugt wird.

3. Verfahren nach Anspruch 1, **dadurch gekennzeichnet, dass** das Austreiben des Druckfluides (19) durch Beaufschlagung des Hohlprofilinneren (23) mittels Pressluft erfolgt, die über einen im Axialstempel (6,7) ausgebildeten separat zum Entsorgungskanal angeordneten Druckzufuhrkanal in das Hohlprofilinnere (23) eingeleitet wird.

4. Verfahren nach einem der Ansprüche 1 bis 3, **dadurch gekennzeichnet, dass** der Hohlprofilrohling (5) vor dem Befüllen mittels der Axialstempel (6,7) abgedichtet wird, wonach der Hohlprofilrohling (5) befüllt wird, indem das Druckfluid (19) über zumindest eine im Axialstempel (6,7) ausgebildete Zulaufbohrung (13) in den Hohlprofilrohling (5) eingeleitet wird, und dass gleichzeitig die im Hohlprofilrohling (5) eingeschlossene Luft aus diesem über einen zur Zulaufbohrung (13) separaten Entlüftungskanal (17) zumindest eines der Axialstempel (6,7) herausgeleitet wird.

5. Verfahren nach einem der Ansprüche 1 bis 4, **dadurch gekennzeichnet, dass** der Rohling (5) im geschlossenen Kombinationswerkzeug durch Hochdruckbeaufschlagung des Druckfluids (19) aufweitend umgeformt wird.

6. Vorrichtung zur Herstellung eines Verbundbauteils, mit einem Kombinationswerkzeug, das sich aus einem Innenhochdruckumformwerkzeug (2) und einem Spritzgießwerkzeug zusammensetzt, wobei in der Gravur (3) des Kombinationswerkzeugs ein rohrförmiger Hohlprofilrohling (5) aufnehmbar ist, mit zwei Axialstempeln (6,7), die die Rohlingsenden abdichten, und mit einer Befülleinrichtung
zum Einleiten eines Druckfluids (19) in das Innere des Hohlprofilrohlings (5), welches diesen innenseitig benetzt, wobei das Spritzgießwerkzeug zur Umspritzung des Hohlprofils (22) mit Kunststoff über einen Einspritzkanal an eine in die Gravur eingebundene Kavität angeschlossen ist,
**dadurch gekennzeichnet, dass** die Vorrichtung (1) eine Entleerungseinrichtung beinhaltet, die nach der Umformung des zum Hohlprofil (22) umgeformten Hohlprofilrohlings (5) im abgedichteten Zustand des Hohlprofils (22) an den Axialstempel (6,7) angeschlossen und über eine im Axialstempel (6,7) ausgebildete Durchgangsbohrung mit dem Inneren (23) des Hohlprofils (22) verbunden ist, dass der Axialstempel (6,7) einen Entsorgungskanal aufweist, über den das Druckfluid (19) austreibbar ist, und dass die Axialstempel (6,7) jeweils einen Durchgangskanal aufweisen, der einerseits in den Rohling (5) mündet und der andererseits an eine Fluidhochdruckerzeugungsanlage angeschlossen ist.

7. Vorrichtung nach Anspruch 6,
**dadurch gekennzeichnet, dass** die Entleerungseinrichtung eine Druckversorgungseinheit aufweist, mittels derer das Druckfluid (19) zum Austreiben druckbeaufschlagbar ist.

8. Vorrichtung nach Anspruch 7,
**dadurch gekennzeichnet, dass** die Druckversorgungseinheit eine Vakuumpumpe ist.

9. Vorrichtung nach einem der Ansprüche 6 bis 8,
**dadurch gekennzeichnet, dass** die Druckversorgungseinheit die Fluidhochdruckerzeugungsanlage oder ein Teil von dieser ist, welche zum Austreiben des Druckfluids (19) bezüglich der Druckrichtung während der Aufweitphase des Hohlprofilrohlings (5) invertiert arbeitet, wobei die Durchgangsbohrung den Durchgangskanal und/oder den Entsorgungskanal bildet.

10. Vorrichtung nach Anspruch 7,
**dadurch gekennzeichnet, dass** die Druckerzeugungseinheit mit Pressluft arbeitet, und dass im Axialstempel (6,7)
ein separat zum Entsorgungskanal angeordneter, die Durchgangsbohrung bildender Druckzufuhrkanal ausgebildet ist, über den die Pressluft in das Hohlprofilinnere (23) einleitbar ist.

11. Vorrichtung nach einem der Ansprüche 6 bis 10,
**dadurch gekennzeichnet, dass** der Entsorgungskanal an der geodätisch tiefsten Stelle des Axialstempels (6,7) angeordnet ist.

12. Vorrichtung nach einem der Ansprüche 6 bis 11,
**dadurch gekennzeichnet, dass** der Entsorgungskanal durch den Durchgangskanal gebildet ist oder dass dieser zentral im Axialstempel (6,7) verläuft, in welchen der Entsorgungskanal einmündet.

13. Vorrichtung nach einem der Ansprüche 6 bis 12,
**dadurch gekennzeichnet, dass** der Axialstempel (6,7) eine zur Befüllung des Hohlprofilrohlings (5) dienende Zulaufbohrung (13) und einen zu dieser separaten zum Herausleiten von im Hohlprofilrohling (5) eingeschlossener Luft aus dem Hohlprofilrohling (5) dienenden Entlüftungskanal (17) aufweist.

14. Vorrichtung nach Anspruch 13,
**dadurch gekennzeichnet, dass** der Entlüftungskanal (17) mit dem Druckzufuhrkanal und die Zulaufbohrung (13) mit dem Entsorgungskanal und/oder der im Axialstempel (6,7) verlaufenden Durchgangsbohrung und dem Durchgangskanal identisch ist.

## Claims

1. Method for producing a composite component, wherein a tubular section blank (5) is installed into the cavity (3) of a combination tool consisting of a hydroforming tool (2) and an injection moulding tool, is filled with a pressure fluid (9) such that the blank (5) is internally wetted and is sealed at the ends by means of two axial dies (6, 7), whereupon the filled and pressurised blank (5) is expanded, followed by coating the finish-formed tubular section (22) with a plastic material in the same tool, **characterised in that** the tubular section (22) is drained after the forming process in the sealed state at least to a drop-free condition, wherein the pressure fluid (19) is displaced from the tubular section (22) by the action of a pressure via at least one disposal passage in the axial die (6, 7), each of the axial dies (6, 7) having a through-passage which terminates at the blank (5) at one end while the other end is connected to a fluid high-pressure generating system.

2. Method according to claim 1,
**characterised in that** the pressure fluid (19) is extracted from the tubular section (22).

3. Method according to claim 1,
**characterised in that** the pressure fluid (19) is displaced by applying compressed air to the interior (23) of the tubular section, the compressed air being introduced into the interior (23) of the tubular section via a pressurisation passage formed separately from the disposal passage in the axial die (6, 7).

4. Method according to any of claims 1 to 3,
**characterised in that** the tubular section blank (5) is sealed by means of the axial dies (6, 7) before filling, whereupon the tubular section blank (5) is filled by introducing the pressure fluid (19) into the tubular section blank (5) via at least one inlet bore (13) formed in the axial die (6, 7), and **in that** at the same time the air trapped in the tubular section blank (5) is discharged therefrom via a vent passage (17) of at least one of the axial dies (6, 7) which is separate from the inlet bore (13).

5. Method according to any of claims 1 to 4,
**characterised in that** the blank (5) is expanded in the closed combination tool by applying a high pressure to the pressure fluid (19).

6. Device for producing a composite component, comprising a combination tool consisting of a hydroforming tool (2) and an injection moulding tool, wherein a tubular section blank (5) can be placed into the cavity (3) of the combination tool, further comprising two axial dies (6, 7) which seal the ends of the blank and further comprising a filling device for introducing a pressure fluid (19) into the interior of the tubular section blank (5) for wetting its interior, wherein the injection moulding tool is connected to the cavity via an injection passage for coating the tubular section (22) with plastic,
**characterised in that** the device (1) includes a drainage device which, following the shaping of the tubular section blank (5) to produce the tubular section (22), is connected to the axial die (6, 7) in the sealed state of the tubular section (22) and connected via a through-hole formed in the axial die (6, 7) to the interior (23) of the tubular section (22), **in that** the axial die (6, 7) has a disposal passage via which the pressure fluid (19) can be expelled, and **in that** each of the axial dies (6, 7) has a through-passage of which one end terminates into the blank (5) while the other end is connected to a fluid high-pressure generating system.

7. Device according to claim 6,
**characterised in that** the drainage device comprises a pressure supply unit by means of which the pressure fluid (19) can be pressurised for expelling.

8. Device according to claim 7,
**characterised in that** the pressure supply unit is a vacuum pump.

9. Device according to any of claims 6 to 8,
**characterised in that** the pressure supply unit is the fluid high-pressure generating system or a part thereof, which operates in an inverted manner for expelling the pressure fluid (19) with respect to the pressure direction during the expanding phase of the tubular section blank (5), wherein the through-bore forms the through-passage and/or the drain passage.

10. Device according to claim 7,
**characterised in that** the pressure generating unit operates with compressed air, and **in that** a pressurisation passage separate from the drain passage, which forms the through-bore and via which compressed air can be introduced into the interior (23) of the tubular section, is provided in the axial die (6, 7).

11. Device according to any of claims 6 to 10,
**characterised in that** the drain passage is provided at the geodetically lowest point of the axial die (6, 7).

12. Device according to any of claims 6 to 11,
**characterised in that** the drain passage is represented by the through-passage, or **in that** the latter runs centrally in the axial die (6, 7) into which the drain passage terminates.

13. Device according to any of claims 6 to 12,
**characterised in that** the axial die (6, 7) is provided with a supply bore (13) for filling the tubular section blank (5) and with a vent passage (17) separate therefrom for carrying air trapped in the tubular section blank (5) out of the tubular section blank (5).

14. Device according to claim 13,
**characterised in that** the vent passage (17) is identical with the pressurisation passage and the supply bore (13) is identical with the drain passage and/or with the through-bore and the through-passage extending in the axial die (6, 7).

## Revendications

1. Procédé de fabrication d'un élément composite, une ébauche de profilé creux (5) tubulaire est introduite dans l'empreinte (3) d'un outillage mixte composé d'un moule de formage à haute pression interne (2) et d'un outillage de moulage par injection, remplie d'un fluide (10) sous pression de telle façon que l'intérieur de l'ébauche (5) en soit aspergé, et étanchéifiée aux extrémités au moyen de deux poinçons axiaux (6 et 7), d'après quoi l'ébauche (5) remplie et mise sous pression est élargie, ensuite le profilé creux (22) fini est enrobé de matière plastique dans le même moule, **caractérisé en ce qu'**après le moulage et au moins une fois étanchéifié, le profilé creux (22) est vidé jusqu'à ne plus goutter, le fluide sous pression (19) étant expulsé sous l'action d'une pression provenant du profilé creux (22) par au moins un canal d'évacuation formé dans le poinçon axial (6 et 7), les poinçons axiaux (6, 7) présentant chacun un canal de passage dont une extrémité débouche dans l'ébauche (5) et l'autre extrémité est raccordée à un système de production de fluide haute pression.

2. Procédé selon la revendication 1, **caractérisé en ce que** le fluide sous pression (19) est aspiré du profilé creux (22).

3. Procédé selon la revendication 1, **caractérisé en ce que** l'expulsion du fluide sous pression (19) s'effectue par l'application d'air comprimé à l'intérieur du profilé creux (23) qui est envoyé à l'intérieur du profilé creux (23) par un canal d'alimentation de pression formé de manière séparée du canal d'évacuation disposé dans le poinçon axial (6, 7).

4. Procédé selon l'une quelconque des revendications 1 à 3, **caractérisé en ce que** l'ébauche (5) de profilé creux est étanchéifié avant le remplissage au moyen des poinçons axiaux (6, 7), après quoi l'ébauche de profilé creux (5) est remplie en ce que le fluide sous pression (19) est envoyé dans l'ébauche de profilé creux (5) par au moins un trou d'alimentation (13) formé dans le poinçon axial (6, 7), et **en ce que** simultanément l'air enfermé dans l'ébauche de profilé creux (5) est évacué de celle-ci par un canal d'évacuation (17) séparé du trou d'alimentation (13) d'au moins un des poinçons axiaux (6, 7).

5. Procédé selon l'une quelconque des revendications 1 à 4, **caractérisé en ce que** l'ébauche (5) est élargie dans un outillage mixte fermé par l'application haute pression du fluide sous pression (19).

6. Dispositif pour la fabrication d'un élément composite, avec un outillage mixte qui est composé d'un moule de formage à haute pression interne (2) et d'un outillage de moulage par injection, une ébauche de profilé creux (5) pouvant être logée dans l'empreinte (3) de l'outillage mixte, avec deux poinçons axiaux (6, 7) qui étanchéifient les extrémités de l'ébauche, et avec un dispositif de remplissage pour introduire un fluide sous pression (19) à l'intérieur de l'ébauche de profilé creux (5) qui asperge l'intérieur de celle-ci, l'outillage de moulage par injection pour la projection de matière plastique dans le profilé creux (22) étant raccordé par un canal d'injection à une cavité intégrée dans l'empreinte, **caractérisé en ce que** le dispositif (1) comprend un dispositif de vidange qui est raccordé au poinçon axial (6, 7) après le moulage de l'ébauche (22) en forme de profilé creux (5) une fois étanchéifié et est relié à l'intérieur (23) du profilé creux (22) par un trou de passage formé dans le poinçon axial (6, 7), **en ce que** le poinçon axial (6, 7) présente un canal d'évacuation par lequel le fluide sous pression (19) peut être évacué et **en ce que** chacun des poinçons axiaux (6, 7) présente un canal de passage qui d'une part débouche dans le profilé (5) et d'autre part est raccordé à un système de production de fluide haute pression.

7. Dispositif selon la revendication 6, **caractérisé en ce que** le dispositif d'évacuation présente une unité d'alimentation en pression au moyen de laquelle le fluide sous pression (19) à évacuer puisse être mis sous pression.

8. Dispositif selon la revendication 7, **caractérisé en ce que** l'unité d'alimentation en pression est une pompe à vide.

9. Dispositif selon l'une quelconque des revendications 6 à 8, **caractérisé en ce que** l'unité d'alimentation en pression est le système de production de fluide haute pression ou une partie de celui-ci, laquelle pour évacuer le fluide sous pression (19) fonctionne de manière inversée par rapport au sens de la pression pendant la phase d'élargissement de l'ébauche de profilé creux (5), le trou de passage formant le canal de passage et / ou le canal d'évacuation.

10. Dispositif selon la revendication 7, **caractérisé en ce que** le système de production de pression fonctionne avec de l'air comprimé et **en ce qu'**un canal d'alimentation de pression est configuré dans le poinçon axial (6, 7) séparément du canal d'évacuation et forme le trou de passage, par lequel l'air comprimé peut être introduit à l'intérieur du profilé creux (23).

11. Dispositif selon l'une quelconque des revendications 6 à 10, **caractérisé en ce que** le canal d'évacuation est disposé à l'endroit géodésiquement le plus profond du poinçon axial (6, 7).

12. Dispositif selon l'une quelconque des revendications 6 à 11, **caractérisé en ce que** le canal d'évacuation est formé par le canal de passage ou **en ce que** celui-ci s'étend de manière centrée dans le poinçon axial (6, 7) dans lequel débouche le canal d'évacuation.

13. Dispositif selon l'une quelconque des revendications 6 à 12, **caractérisé en ce que** le poinçon axial (6, 7) présente un trou d'alimentation (13) servant au remplissage de l'ébauche de profilé creux (5) et un canal de purge (17) séparé de celui-ci servant à évacuer de l'ébauche de profilé creux (5) l'air enfermé dans l'ébauche de profilé creux (5).

14. Dispositif selon la revendication 13, **caractérisé en ce que** le canal de purge (17) est identique au canal d'alimentation de pression et le trou d'alimentation (13) est identique au canal d'évacuation et / ou au trou de passage s'étendant dans le poinçon axial (6, 7) et au canal de passage.
